(19) Europäisches Patentamt / European Patent Office / Office européen des brevets

(11) **EP 3 847 622 B1**

(12) **FASCICULE DE BREVET EUROPEEN**

(45) Date de publication et mention de la délivrance du brevet:
**08.11.2023 Bulletin 2023/45**

(21) Numéro de dépôt: **19753388.8**

(22) Date de dépôt: **19.08.2019**

(51) Classification Internationale des Brevets (IPC):
***G06T 7/90*** *(2017.01)*

(52) Classification Coopérative des Brevets (CPC):
**G06T 7/90;** G06T 2207/10024; G06T 2207/10048; G06T 2207/30181

(86) Numéro de dépôt international:
**PCT/EP2019/072188**

(87) Numéro de publication internationale:
**WO 2020/048762 (12.03.2020 Gazette 2020/11)**

(54) **MESURE D'ALBÉDO D'UNE SURFACE DE TERRAIN, SANS NÉCESSITÉ D'UN ALBÉDOMÈTRE CONVENTIONNEL**

MESSUNG DER ALBEDO VON LANDOBERFLÄCHEN OHNE NOTWENDIGKEIT EINES HERKÖMMLICHEN ALBEDOMETERS

MEASUREMENT OF LAND SURFACE ALBEDO, WITHOUT NEEDING A CONVENTIONAL ALBEDOMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2018 FR 1858060**

(43) Date de publication de la demande:
**14.07.2021 Bulletin 2021/28**

(73) Titulaire: **Electricité de France**
**75008 Paris (FR)**

(72) Inventeur: **EL HAJJE, Gilbert**
**75017 PARIS (FR)**

(74) Mandataire: **Plasseraud IP**
**66, rue de la Chaussée d'Antin**
**75440 Paris Cedex 09 (FR)**

(56) Documents cités:
**FR-A1- 3 046 510**

- **TEEMU HAKALA ET AL: "Acquisition of Bidirectional Reflectance Factor Dataset Using a Micro Unmanned Aerial Vehicle and a Consumer Camera", REMOTE SENSING, vol. 2, no. 3, 22 mars 2010 (2010-03-22), pages 819-832, XP055583089, CH ISSN: 2072-4292, DOI: 10.3390/rs2030819**
- **M. DUMONT ET AL: "Monitoring spatial and temporal variations of surface albedo on Saint Sorlin Glacier (French Alps) using terrestrial photography", THE CRYOSPHERE, vol. 5, no. 3, 27 septembre 2011 (2011-09-27), pages 759-771, XP055583679, DOI: 10.5194/tc-5-759-2011**
- **Andrew Wilson: "FPOAs speed flat-field correction - Vision Systems Design", , 1 mai 2006 (2006-05-01), XP055584254, Extrait de l'Internet: URL:https://www.vision-systems.com/article s/print/volume-11/issue-5/technology-trend s/image-processing/fpoas-speed-flat-field-correction.html [extrait le 2019-04-29]**
- **GOW R D ET AL: "A Comprehensive Tool for Modeling CMOS Image-Sensor-Noise Performance", IEEE TRANSACTIONS ON ELECTRON DEVICES, IEEE SERVICE CENTER, PISACATAWAY, NJ, US, vol. 54, no. 6, 1 juin 2007 (2007-06-01), pages 1321-1329, XP011184957, ISSN: 0018-9383, DOI: 10.1109/TED.2007.896718**

- J Garvelmann ET AL: "From observation to the quantification of snow processes with a time-lapse camera network", Hydrology and Earth System Sciences, 12 avril 2013 (2013-04-12), pages 1415-1429, XP055583705, Katlenburg-Lindau DOI: 10.5194/hess-17-1415-2013 Extrait de l'Internet: URL:https://www.hydrol-earth-syst-sci.net/17/1415/2013/hess-17-1415-2013.pdf [extrait le 2019-04-25]

**Description**

La présente invention concerne la caractérisation de l'albédo d'une surface de terrain.

La surface de ce terrain peut être typiquement exposée à la lumière du jour, dans un exemple d'application où l'on recherche un emplacement optimal pour une ferme de modules photovoltaïques bifaciaux.

En effet, les modules photovoltaïques bifaciaux (notamment à base de silicium cristallin) devraient devenir une technologie de premier plan dans l'industrie du photovoltaïque en raison de leur capacité à induire une amélioration significative du productible photovoltaïque et de la réduction des coûts par rapport aux modules photovoltaïques monofaciaux (à base de silicium cristallin également).

Plus précisément, les modules photovoltaïques bifaciaux recueillent non seulement la lumière du soleil par la face de dessus (directement exposée au soleil), mais ils recueillent aussi par la face arrière la lumière qui est réfléchie par le sol et plus généralement par l'environnement. Les modules bifaciaux peuvent générer un rendement de production supplémentaire allant de 10 à 30% par rapport aux modules monofaciaux.

A ce stade, les caractéristiques de la surface sur laquelle sont posés ces modules bifaciaux ainsi que leur environnement sont des éléments clés pour améliorer les gains de productible des modules bifaciaux. Plus précisément, le coefficient de réflexion du sol, ou « albédo », doit être caractérisé pour choisir un terrain d'installation permettant d'atteindre de tels gains. Naturellement, plus l'albédo est important, plus les gains de productible photovoltaïque, atteints via la bifacialité des modules, sont importants.

La phase de conception et de développement d'une centrale photovoltaïque à base de modules bifaciaux nécessite une mesure précise de l'albédo sur l'ensemble du terrain destiné à accueillir cette ferme photovoltaïque. Il est possible d'estimer ensuite précisément les gains de productible photovoltaïque à attendre, dus à la bifacialité des modules.

L'accès à l'albédo et la possibilité de cartographier l'albédo pour chaque site ciblé représente donc un enjeu fort.

Habituellement, cette mesure est effectuée à l'aide d'un albédomètre, ce qui s'avère excessivement coûteux. Notamment, un albédomètre présente de nombreuses contraintes en termes de transport et d'installation. L'albédo est de ce fait, au mieux, estimé autour d'une certaine valeur, induisant ainsi des incertitudes importantes au niveau de l'estimation des gains de production (surestimation ou sous-estimation). Il est à noter également que la cartographie de l'albédo à l'échelle d'un site entier nécessite l'utilisation de plusieurs albédomètres ce qui ajoute un surcoût important.

La présente invention vient améliorer cette situation.

Elle propose à cet effet un procédé de caractérisation d'un albédo d'un terrain, à partir d'une image numérique acquise de ce terrain à l'aide d'au moins une caméra, le procédé comprenant :

- une calibration préalable de la caméra, dans laquelle on acquière une matrice de correction d'intensité de chaque pixel (x,y) d'image acquise par la caméra, et

- une caractérisation courante de l'albédo d'un terrain sur lequel une mire, d'albédo connu $\alpha_{Référence}$, est déposée au sol de manière à être présente dans une image courante acquise avec la même caméra, ladite caractérisation courante de l'albédo du terrain étant menée par un traitement de l'image courante dans lequel :

  • on divise l'intensité de chaque pixel (x,y) de l'image courante par un coefficient de la matrice de correction correspondant à ce pixel, pour générer une image courante corrigée $\mathrm{Im}_{Corr}^{Site}(x, y)$,

  • on estime une intensité lumineuse moyenne $I_{moy}^{ref}$ de la mire apparaissant dans l'image corrigée, et

  • on détermine une cartographie d'albédo du terrain $\alpha_{Site}(x, y)$ en fonction de l'albédo connu de la mire $\alpha_{Référence}$,

$$\alpha_{Site}(x, y) = \frac{\mathrm{Im}_{Corr}^{Site}(x, y)}{I_{moy}^{ref}} * \alpha_{Référence}$$

par une relation du type

La présente invention permet d'obtenir ainsi une cartographie directe, rapide et à bas coût de l'albédo d'une surface de terrain, ne nécessitant pas alors l'emploi d'un albédomètre conventionnel.

La surface du terrain considérée peut être de toute nature et de toute topologie, et doit simplement être en mesure d'accueillir une mire du type précité.

Dans une réalisation, la calibration préalable est menée en particulier pour tenir compte d'une dispersion de sensibilité entre des photosites d'un détecteur de la caméra.

La calibration préalable de la caméra comporte:

- l'acquisition, à l'aide de la caméra, d'une image numérique de référence d'un objet de référence,
- un traitement statistique de cette image de référence pour identifier une intensité-type de pixel $\mu$ dans l'image de référence, puis
- une comparaison de chaque intensité de pixel Im(x,y) de l'image de référence à l'intensité-type $\mu$ pour obtenir la matrice de correction $M_{corr}(x, y)$ de chaque pixel (x,y) de la caméra.

La comparaison précitée est estimée sous la forme d'un écart relatif entre les deux grandeurs concernées, et la matrice de correction $M_{corr}(x, y)$ de chaque pixel (x,y) de la caméra s'exprime par une relation du type:

$$M_{corr}(x, y) = \frac{\text{Im}(x, y) - \mu}{\text{Im}(x, y)}$$

Dans une réalisation particulière, pour obtenir l'intensité-type précitée, on peut prévoir que le traitement statistique soit effectué pixel par pixel, pour déterminer un modèle de loi de distribution, duquel est extraite une valeur centrale $\mu$ correspondant à ladite intensité-type.

Par exemple, ce modèle peut être un modèle de loi de distribution Normale, obtenu en déterminant une fréquence d'occurrence de chaque intensité de pixel dans l'image de référence en fonction de cette intensité de pixel.

Dans une forme de réalisation, l'objet de référence utilisé pour la calibration peut correspondre simplement à la mire qui sera posée au sol, et d'albédo connu.

Dans une forme de réalisation avantageuse mais optionnelle :

- on utilise une pluralité de caméras, sensibles dans des gammes de longueurs d'onde respectives, dont on acquière les matrices de correction,

- on acquière des images courantes respectives du terrain, avec la mire posée au sol, à l'aide de chacune des caméras et on traite les images courantes acquises pour obtenir une cartographie d'albédo du terrain dans chacune desdites gammes de longueurs d'onde respectives.

Typiquement, les gammes de longueurs d'onde comportent au moins le domaine du visible et le domaine de l'infrarouge.

On peut alors estimer une cartographie d'albédo moyen du terrain $\alpha_{Site}(x, y)$ avec des pondérations affectées aux cartographies d'albédos du terrain $\alpha_{Site}^{Visible}(x, y)$, $\alpha_{Site}^{Infrarouge}$ obtenues dans les gammes de longueurs d'onde respectives, selon une relation du type:

$$\alpha_{Site}(x, y) = A\alpha_{Site}^{Visible}(x, y) / (A + B) + B\alpha_{Site}^{Infrarouge}(x, y) / (A + B)_,$$

avec A et B positifs.

Une telle réalisation est avantageuse notamment dans le cas où on utilise la cartographie d'albédo du terrain pour disposer des modules photovoltaïques bifaciaux dans des emplacements optimums du terrain.

Dans une telle application, on peut utiliser les cartographies d'albédo du terrain dans chacune des gammes de longueurs d'onde respectives précitées, pour disposer des modules photovoltaïques bifaciaux, en tenant compte en particulier de l'importance relative d'albédo du terrain dans une gamme de longueurs d'onde donnée, par rapport à une autre gamme de longueurs d'onde, en fonction notamment du type de matériaux à propriétés photovoltaïques utilisés dans la fabrication desdits modules bifaciaux.

La présente invention vise aussi un dispositif de caractérisation d'un albédo d'un terrain, à partir d'une image numérique acquise de ce terrain, le dispositif comportant au moins une caméra pour acquérir ladite image numérique, une mire à disposer sur le terrain et un circuit de traitement de ladite image acquise pour la mise en oeuvre du procédé ci-avant.

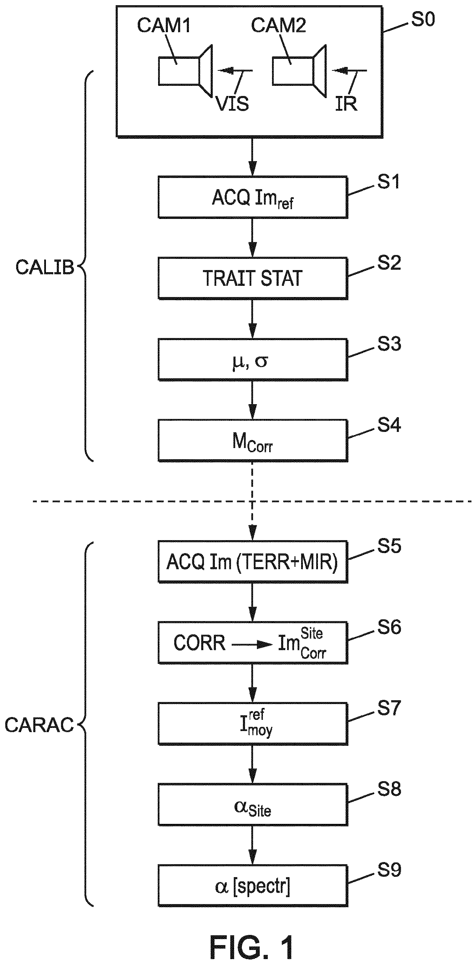

La présente invention vise aussi un programme informatique comportant des instructions pour la mise en oeuvre du procédé ci-avant, lorsque ces instructions sont exécutées par un processeur d'un circuit de traitement. La figure 1 (commentée ci-après) peut illustrer l'algorithme général d'un tel programme informatique, dans un exemple de réalisation.

D'ailleurs, d'autres avantages et caractéristiques de l'invention apparaitront à la lecture de la description d'exemples de réalisation donnés ci-après à titre aucunement limitatif, et à l'examen des dessins annexés sur lesquels :

- La figure 1 illustre les étapes d'un procédé selon un exemple de réalisation de l'invention,
- La figure 2 illustre un exemple de dispositif au sens de l'invention.

La présente invention permet de surmonter les limitations des albédomètres classiques, en fournissant des cartographies d'albédo à l'aide d'un dispositif facilement transportable et accessible, tel qu'une caméra ou appareil photographique numérique et une simple mire, d'albédo connu, servant de référence.

Dans une réalisation particulière (et optionnelle), on peut utiliser deux appareils photographiques, plutôt qu'un seul appareil, pour les raisons exposées ci-après. Le coefficient de réflectivité d'une surface (ou l'albédo) contient une information spectrale. En fonction de la nature et des caractéristiques de cette surface, l'intensité de la lumière réfléchie par cette dernière présente une dépendance spectrale. En d'autres termes, et d'un point de vue optique, l'albédo d'une surface représente en réalité un spectre, où l'intensité de la lumière réfléchie est représentée en fonction de la longueur d'onde de la lumière. Cette information spectrale s'étend du domaine visible jusqu'au domaine infrarouge de la lumière.

Pour pouvoir couvrir et capter l'ensemble de cette information, il est prévu dans une réalisation l'utilisation de deux caméras :

- une caméra dont la sensibilité spectrale appartient au domaine du visible qui s'étend de 400 nanomètres jusqu'à 800 nanomètres, et
- une deuxième caméra dont la sensibilité spectrale appartient principalement au domaine de l'infrarouge et qui s'étend de 800 nanomètres jusqu'à 1700 nanomètres.

Toutefois, il convient d'appliquer une correction de l'inhomogénéité spatiale intrinsèque à chacune des caméras utilisées. Plus précisément, le détecteur d'une caméra, en fonction de sa qualité, présente des inhomogénéités spatiales en ce qui concerne la répartition spatiale de sa sensibilité de détection. Théoriquement, face à une source de lumière isotrope et homogène par nature, chaque pixel d'un détecteur caméra est censé fournir la même intensité de détection. En réalité, en fonction de la qualité du détecteur, l'inhomogénéité spatiale intrinsèque en termes de sensibilité est inévitable.

Il convient donc de générer une matrice de correction de la sensibilité spatiale des pixels, $M_{corr}(x, y)$ pour chaque caméra utilisée.

A cet effet, l'invention propose l'utilisation d'un échantillon dont la surface possède un coefficient de réflectivité ou albédo connu et spatialement homogène (noté ci-après $\alpha_{Référence}$), et de mettre en oeuvre les étapes exposées ci-après en référence à la figure 1, pour chacune des caméras utilisées.

Une première étape S0 consiste en le choix des caméras CAM1, CAM2, etc. et des longueurs d'onde de détection de ces caméras (dans le visible VIS ou dans l'infrarouge IR, ou autres), qui sont pertinentes par rapport aux caractéristiques des matériaux photovoltaïques prévus dans les modules bifaciaux à installer.

Ensuite, avec chaque caméra utilisée, on acquière à l'étape S1 une image numérique de référence de la mire $Im_{ref}$, la mire étant d'albédo connu. A cet effet, on peut imager, en utilisant chacune des deux caméras, la surface de cet objet de référence que constitue la mire, puis générer et enregistrer chacune des images obtenues par les caméras respectives CAM1, CAM2, etc., notées $Im_1(x, y)$, $Im_2(x, y)$, etc.

A l'étape S2, on traite statistiquement cette image de référence pixel par pixel, pour déterminer un modèle de loi de distribution normale, duquel sont extraits à l'étape S3 une valeur centrale $\mu$ (et éventuellement mais optionnellement une largeur de la distribution normale $\sigma$).

Ensuite, à l'étape S4, on compare chaque intensité de pixel à la valeur centrale $\mu$ pour estimer alors une matrice de correction pour chaque caméra utilisée:

$$M_{corr}(x, y) = \frac{Im_{ref}(x, y) - \mu}{Im_{ref}(x, y)}$$

Pour effectuer le traitement statistique précité, on peut par exemple tracer la fréquence d'occurrence de chaque intensité de pixel en fonction de cette intensité de pixel. Naturellement, un tel graphe présente une loi de distribution normale. Cette distribution est ensuite modélisée en utilisant par exemple une loi Normale de laquelle il est possible d'extraire la valeur centrale $\mu$ ainsi que la largeur de la distribution Normale . D'un point de vue qualitatif, plus ce paramètre $\sigma$ est de valeur faible, meilleure est la qualité du détecteur de la caméra utilisée. On peut ensuite, pour chaque caméra, comparer chaque intensité de pixel à la valeur centrale $\mu$ trouvée pour cette caméra, cette valeur centrale étant la plus représentative de la sensibilité spatiale du détecteur. Plus précisément, on calcule les matrices de correction pour chaque caméra comme suit:

$$M_{corr,1}(x, y) = \frac{\text{Im}_1(x, y) - \mu_1}{\text{Im}_1(x, y)}, \quad M_{corr,2}(x, y) = \frac{\text{Im}_2(x, y) - \mu_2}{\text{Im}_2(x, y)},$$

etc.

Ces matrices servent donc pour la suite comme éléments de corrections appliqués à chaque image prise du terrain pour lequel on souhaite cartographier l'albédo $\alpha_{Site}(x, y)$. Il est à noter également, que dans le cadre de l'application de la présente invention, ces deux premières étapes de calibration, peuvent n'être effectuées qu'une seule fois par an, pour chaque caméra, et indépendamment du site choisi.

L'ensemble de ces étapes précédentes constitue ainsi une calibration initiale de chaque caméra pour construire la matrice de correction pixel par pixel qui est utilisée ensuite dans une étape courante CARAC, de caractérisation d'albédo de terrain, dont la succession des opérations qui la constitue est décrite ci-après toujours en référence à la figure 1.

Pendant cette étape courante CARAC, une image numérique courante du terrain à caractériser est acquise à l'étape S5 avec chaque caméra dont la matrice de correction a été ainsi calculée. La même mire (dont l'albédo de référence est connu) est posée sur le terrain de manière à être présente dans l'image courante acquise par chaque caméra.

Ensuite, on effectue un traitement de l'image acquise comme suit :

- on divise, à l'étape S6, l'intensité de chaque pixel (x,y) de l'image courante Im(TERR+MIR) par un coefficient correspondant de mêmes coordonnées (x,y) (ligne x colonne y) de la matrice de correction, pour générer une image courante corrigée du site, notée $\text{Im}_{Corr}^{Site}(x, y)$,

- on estime à l'étape S7 une intensité lumineuse moyenne $I_{moy}^{ref}$ de la mire dans l'image corrigée (après une identification des pixels représentant la mire, par exemple par reconnaissance de forme de la mire, ou manuellement),

- et, à l'étape S8, on détermine l'albédo du terrain $\alpha_{Site}(x, y)$ en fonction de l'albédo de la mire $\alpha_{Référence}$, comme suit :

$$\alpha_{Site}(x, y) = \frac{\text{Im}_{Corr}^{Site}(x, y)}{I_{moy}^{ref}} * \alpha_{Référence}$$

Ainsi, l'étape courante de caractérisation, proprement dite, dans laquelle on prend une image du site ciblé pour la construction de la centrale photovoltaïque, peut se réaliser en pratique comme suit. On commence par poser la mire, en tant qu'échantillon de calibration précédemment utilisé pour la calibration des caméras et dont l'albédo est connu, sur une surface plate du terrain ciblé. On acquière ensuite une image numérique (une photographie numérique) de l'ensemble du terrain, y compris de la cible posée au sol, en utilisant chacune des caméras calibrées, par exemple deux caméras, l'une pour le visible, l'autre pour l'infrarouge.

On récupère ensuite ces deux images du site, et on effectue le traitement d'images suivant dans le but de générer la cartographie de l'albédo du site.

Dans un premier temps, on divise, pixel par pixel, chacune des deux images acquises, par la matrice de correction de la caméra correspondante, ce qui génère deux nouvelles images du site, corrigées des inhomogénéités spatiales en intensité dues à la qualité intrinsèque des détecteurs de caméra, et telles que:

$$\text{Im}_{Corr,1}^{Site}(x, y) = \frac{\text{Im}_1^{Site}(x, y)}{M_{corr,1}(x, y)}, \quad \text{Im}_{Corr,2}^{Site}(x, y) = \frac{\text{Im}_2^{Site}(x, y)}{M_{corr,2}(x, y)}$$

Une routine informatique peut vérifier ensuite que chaque intensité de pixel ne dépasse pas le seuil de saturation en intensité dans le but de fournir dans la suite des calculs d'albédo par pixel qui sont fiables.

Sur les deux images corrigées, un utilisateur ou une routine informatique de reconnaissance de forme peut sélectionner la zone de l'image correspondant à la mire et calculer ensuite une intensité moyenne sur cette zone particulière. Le traitement peut se poursuivre par un calcul de division pixel par pixel, de l'image du site par l'intensité moyenne de la zone de l'image correspondant à la mire. Une matrice de ratio d'intensités de pixels est ainsi obtenue pour chaque caméra.

Enfin, et dans le but de générer une cartographie complète de l'albédo du site dans le domaine optique choisi (par exemple visible et infrarouge), le traitement multiplie chaque matrice de ratio d'intensités de pixels par l'albédo connu de la mire de référence, comme suit :

$$\alpha_{Site}^{Visible}(x, y) = \frac{\text{Im}_{Corr,1}^{Site}(x, y)}{I_{moy,1}^{R\acute{e}f\acute{e}rence}} * \alpha_{R\acute{e}f\acute{e}rence,1}$$

$$\alpha_{Site}^{Infrarouge}(x, y) = \frac{\text{Im}_{Corr,2}^{Site}(x, y)}{I_{moy,2}^{R\acute{e}f\acute{e}rence}} * \alpha_{R\acute{e}f\acute{e}rence,2}$$

Ensuite, selon une option à l'étape S9 de la figure 1, on peut estimer un albédo moyen du terrain avec des pondérations éventuelles affectées aux gammes de longueurs d'onde d'observation, comme présenté ci-après dans un exemple de deux gammes, visible et infrarouge :

$$\alpha_{Site}(x, y) = A\alpha_{Site}^{Visible}(x, y)/(A + B) + B\alpha_{Site}^{Infrarouge}(x, y)/(A + B)$$, avec A et B positifs, par exemple.

Bien entendu, les deux coefficients A et B peuvent être choisis en fonction des caractéristiques des modules bifaciaux à installer et notamment en fonction du matériau photovoltaïque à la base de tels modules (filière silicium, ou filière CIGS ou autre), et notamment de la largeur de bande interdite de ces matériaux.

Néanmoins, il s'agit d'une réalisation purement optionnelle et dans le cadre d'un développement d'une centrale photovoltaïque moins exigeant en termes de précision et de complétude de la cartographie de l'albédo, l'accès à ce dernier dans le domaine visible de la lumière peut s'avérer suffisant. Par exemple, un utilisateur simplement équipé d'un smartphone intégrant une caméra, peut être en mesure d'effectuer exactement la même procédure précédemment détaillée, générant ainsi les mesures d'albédo et ce à l'aide d'une prise de vue unique.

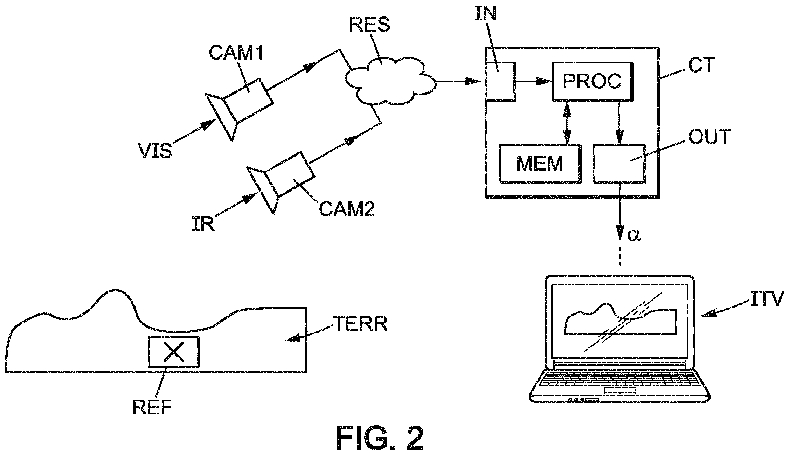

On a illustré sur la figure 2 un exemple de dispositif au sens de l'invention comprenant :

- une mire REF dont l'albédo est connu, apte à être disposée sur un terrain TERR dont l'albédo est à caractériser, et qui a servi à la calibration de
- une ou plusieurs caméras CAM1, CAM2 pour acquérir des images (initialement de calibration, puis des images courantes sur site) préférentiellement dans des longueurs d'onde spectrales différentes (par exemple dans le visible VIS, et dans l'infrarouge IR, respectivement), montées par exemple sur un drone ou un avion, et capable de transmettre (directement par une liaison filaire ou via un réseau de télécommunication RES) des données numériques des images acquises du terrain TERR (par exemple des intensités de pixels), à
- un circuit de traitement CT de ces données d'image, ce circuit CT comprenant typiquement :

  o une interface d'entrée IN pour recevoir ces données,
  o une mémoire MEM apte à stocker au moins temporairement ces données, les données de matrices de correction résultant la calibration, et des données d'instructions informatiques d'un programme informatique selon l'invention,
  o un processeur PROC apte à coopérer avec la mémoire MEM pour lire ces instructions et les exécuter afin de traiter les données d'images acquises selon le procédé illustré sur la figure 1 commentée ci-avant, et
  o une interface de sortie OUT pour délivrer l'albédo du terrain (exact car calibré), résultant du traitement qu'opère le processeur PROC.

Le dispositif peut comporter en outre une interface de visualisation ITV connectée à la sortie OUT du circuit de traitement pour visualiser par exemple une cartographie de l'albédo du terrain pour une gamme de longueur d'onde donnée et décider de l'emplacement le plus propice pour des modules bifaciaux typiquement.

Ainsi, l'invention offre un outil de cartographie courant permettant d'accéder facilement à des mesures résolues spatialement de l'albédo d'un terrain donné et aide ainsi à la conception et la configuration des centrales photovoltaïques au sol à base de panneaux bifaciaux grâce à une meilleure connaissance du terrain. En outre, cet outil est très facilement utilisable sur site.

Néanmoins, la présente invention ne se limite pas aux formes de réalisation décrites ci-avant à titre d'exemples ; elle s'étend à d'autres variantes.

Outre les applications photovoltaïques, l'invention peut être utilisée pour d'autres besoins (comme la topographie au sens général, mais aussi la sismologie, la géophysique ou autres).

**Revendications**

1. Procédé de caractérisation d'un albédo d'un terrain, à partir d'une image numérique acquise de ce terrain à l'aide d'au moins une caméra, le procédé comprenant :

   - une calibration préalable de la caméra, dans laquelle on acquière une matrice de correction d'intensité de chaque pixel (x,y) d'image acquise par la caméra, et
   - une caractérisation courante de l'albédo d'un terrain sur lequel une mire, d'albédo connu $\alpha_{Référence}$, est déposée au sol de manière à être présente dans une image courante acquise avec la même caméra, ladite caractérisation courante de l'albédo du terrain étant menée par un traitement de l'image courante dans lequel :

      • on divise l'intensité de chaque pixel (x,y) de l'image courante par un coefficient de la matrice de correction correspondant à ce pixel, pour générer une image courante corrigée $\text{Im}_{Corr}^{Site}(x, y)$,
      • on estime une intensité lumineuse moyenne $I_{moy}^{ref}$ de la mire apparaissant dans l'image corrigée, et
      • on détermine une cartographie d'albédo du terrain $\alpha_{Site}(x, y)$ en fonction de l'albédo connu de la mire $\alpha_{Référence}$, par une relation du type

$$\alpha_{Site}(x, y) = \frac{\text{Im}_{Corr}^{Site}(x, y)}{I_{moy}^{ref}} * \alpha_{Référence}$$

   et dans lequel, la calibration préalable de la caméra comportant :

      - l'acquisition, à l'aide de la caméra, d'une image numérique de référence d'un objet de référence,
      - un traitement statistique de cette image de référence pour identifier une intensité-type de pixel $\mu$ dans l'image de référence, puis
      - une comparaison de chaque intensité de pixel Im(x,y) de l'image de référence à l'intensité-type $\mu$ pour obtenir la matrice de correction $M_{corr}(x, y)$ de chaque pixel (x,y) de la caméra, **caractérisé en ce que** la matrice de correction $M_{corr}(x, y)$ de chaque pixel (x,y) de la caméra s'exprime par une relation du type:

$$M_{corr}(x, y) = \frac{\text{Im}(x, y) - \mu}{\text{Im}(x, y)}$$

2. Procédé selon la revendication 1, dans lequel ladite calibration préalable est menée pour tenir compte d'une dispersion de sensibilité entre des photosites d'un détecteur de la caméra.

3. Procédé selon l'une des revendications précédentes, dans lequel, le traitement statistique est effectué pixel par pixel, pour déterminer un modèle de loi de distribution, duquel est extraite une valeur centrale $\mu$ correspondant à ladite intensité-type.

4. Procédé selon la revendication 3, dans lequel ledit modèle est un modèle de loi de distribution Normale, obtenu en déterminant une fréquence d'occurrence de chaque intensité de pixel dans l'image de référence en fonction de cette intensité de pixel.

5. Procédé selon l'une des revendications précédentes, dans lequel l'objet de référence utilisé pour la calibration correspond à ladite mire d'albédo connu.

6. Procédé selon l'une des revendications précédentes, dans lequel :

- on utilise une pluralité de caméras, sensibles dans des gammes de longueurs d'onde respectives, dont on acquière les matrices de correction propres chacune à une caméra,
- on acquière des images courantes respectives du terrain, avec la mire posée au sol, à l'aide de chacune des caméras et on traite les images courantes acquises pour obtenir une cartographie d'albédo du terrain dans chacune desdites gammes de longueurs d'onde respectives.

**7.** Procédé selon la revendication 6, dans lequel les gammes de longueurs d'onde comportent au moins le domaine du visible et le domaine de l'infrarouge.

**8.** Procédé selon la revendication 7, dans lequel on estime une cartographie d'albédo moyen du terrain $\alpha_{Site}(x, y)$ avec des pondérations affectées aux cartographies d'albédos du terrain $\alpha_{Site}^{Visible}(x, y)$, $\alpha_{Site}^{Infrarouge}$ obtenues dans lesdites gammes de longueurs d'onde respectives, selon une relation du type:

$$\alpha_{Site}(x, y) = A\alpha_{Site}^{Visible}(x, y) / (A + B) + B\alpha_{Site}^{Infrarouge}(x, y) / (A + B)$$
, avec A et B positifs.

**9.** Procédé selon l'une des revendications précédentes, dans lequel on utilise la cartographie d'albédo du terrain pour disposer des modules photovoltaïques bifaciaux dans des emplacements optimums du terrain.

**10.** Procédé selon l'une des revendications 6 à 8, prises en combinaison avec la revendication 9, dans lequel on utilise les cartographies d'albédo du terrain dans chacune desdites gammes de longueurs d'onde respectives, pour disposer des modules photovoltaïques bifaciaux, en tenant compte en outre d'une importance relative d'albédo du terrain dans une gamme de longueurs d'onde par rapport à une autre gamme de longueurs d'onde, en fonction au moins du type de matériaux à propriétés photovoltaïques utilisés dans lesdits modules bifaciaux.

**11.** Dispositif de caractérisation d'un albédo d'un terrain, à partir d'une image numérique acquise de ce terrain, le dispositif comportant au moins une caméra pour acquérir ladite image numérique, une mire à disposer sur le terrain et un circuit de traitement de ladite image acquise pour la mise en oeuvre du procédé selon l'une des revendications précédentes.

**12.** Programme informatique comportant des instructions pour la mise en oeuvre du procédé selon l'une des revendications 1 à 10, lorsque lesdites instructions sont exécutées par un processeur d'un circuit de traitement.

**Patentansprüche**

**1.** Verfahren zur Charakterisierung einer Albedo eines Umfelds, basierend auf einem digitalen Bild, das von diesem Umfeld mit Hilfe wenigstens einer Kamera aufgenommen wurde, wobei das Verfahren umfasst:

- eine vorherige Kalibrierung der Kamera, wobei eine Intensitätskorrekturmatrix jedes Pixels (x,y) des von der Kamera aufgenommenen Bildes erfasst wird, und
- eine aktuelle Charakterisierung der Albedo eines Umfelds, auf dem ein Testmuster mit bekannter Albedo-Referenz, $\alpha_{Référence}$ auf dem Boden platziert wird, so dass es in einem aktuellen Bild, das mit derselben Kamera aufgenommen wurde, vorhanden ist, wobei die aktuelle Charakterisierung der Albedo des Umfelds durch eine Verarbeitung des aktuellen Bildes durchgeführt wird, wobei:

• die Intensität jedes Pixels (x,y) des aktuellen Bildes durch einen Koeffizienten der diesem Pixel entsprechenden Korrekturmatrix dividiert wird, um ein korrigiertes aktuelles Bild $Im_{Corr}^{Site}(x, y)$ zu erzeugen,

• eine durchschnittliche Lichtintensität $I_{moy}^{ref}$ des Testmusters, das in dem korrigierten Bild erscheint, geschätzt wird, und

• eine Albedo-Kartographie des Umfelds $\alpha_{Site}(x, y)$ basierend auf der bekannten Albedo des Testmusters

$$\text{Typ } \alpha_{Site}(x, y) = \frac{Im_{Corr}^{Site}(x,y)}{I_{moy}^{ref}} * \alpha_{Référence}$$

$\alpha_{Référence}$ durch eine Beziehung vom bestimmt wird,

und wobei die vorherige Kalibrierung der Kamera umfasst:

- Erfassen eines digitalen Referenzbildes eines Referenzobjekts mit der Kamera,
- eine statistische Verarbeitung dieses Referenzbildes, um eine Pixel-Standardintensität $\mu$ im Referenzbild zu identifizieren, dann
- einen Vergleich jeder Pixelintensität $Im(x,y)$ des Referenzbildes mit der Standardintensität $\mu$, um die Korrekturmatrix $M_{Corr}(x,y)$ jedes Pixels (x,y) der Kamera zu erhalten,

**dadurch gekennzeichnet, dass** die Korrekturmatrix $M_{corr}(x,y)$ jedes Pixels (x,y) der Kamera durch eine Beziehung vom Typ

$$M_{Corr}(x, y) = \frac{Im(x, y) - \mu}{Im\ (x, y)}$$

ausgedrückt wird.

2. Verfahren nach Anspruch 1, wobei die vorherige Kalibrierung durchgeführt wird, um eine Empfindlichkeitsstreuung zwischen den Photosites eines Sensors der Kamera zu berücksichtigen.

3. Verfahren nach einem der vorhergehenden Ansprüche, wobei die statistische Verarbeitung Pixel für Pixel durchgeführt wird, um ein Modell einer Verteilungsregel zu bestimmen, aus dem ein Zentralwert $\mu$ extrahiert wird, der der Standardintensität entspricht.

4. Verfahren nach Anspruch 3, wobei das Modell ein Normalverteilungsmodell ist, das durch Bestimmung einer Häufigkeit des Auftretens jeder Pixelintensität im Referenzbild in Abhängigkeit von dieser Pixelintensität erhalten wird.

5. Verfahren nach einem der vorhergehenden Ansprüche, wobei das zur Kalibrierung verwendete Referenzobjekt dem Testmuster mit bekannter Albedo entspricht.

6. Verfahren nach einem der vorhergehenden Ansprüche, wobei:

- eine Vielzahl von Kameras verwendet wird, die in jeweiligen Wellenlängenbereichen empfindlich sind und von denen jeweils kameraspezifische Korrekturmatrizen erfasst werden,
- Erfassen jeweiliger aktueller Bilder des Umfeldes mit dem auf dem Boden platzierten Testmuster mit jeder der Kameras und Verarbeiten der erfassten aktuellen Bilder, um eine Albedo-Kartographie des Umfelds in jedem der jeweiligen Wellenlängenbereiche zu erhalten.

7. Verfahren nach Anspruch 6, wobei die Wellenlängenbereiche wenigstens den Bereich des sichtbaren Lichts und den Infrarotbereich umfassen.

8. Verfahren nach Anspruch 7, wobei eine mittlere Umfeldalbedo-Kartographie $\alpha_{Site}(x,y)$ mit Gewichtungen geschätzt wird, die den Umfeldalbedo-Kartographien $\alpha_{Site}^{Visible}(x, y), \alpha_{Site}^{Infrarouge}$ zugeordnet sind, die in den jeweiligen Wellenlängenbereichen erhalten wurden, gemäß einer Beziehung vom Typ:

$$\alpha_{Site}(x, y) = A\alpha_{Site}^{Visible}(x, y)/(A + B) + B\alpha_{Site}^{Infrarouge}(x, y)/(A + B)$$ , wobei A und B positiv sind.

9. Verfahren nach einem der vorhergehenden Ansprüche, wobei die Albedo-Kartographie des Umfelds verwendet wird, um die bifazialen Photovoltaikmodule an optimalen Stellen des Umfelds anzuordnen.

10. Verfahren nach einem der Ansprüche 6 bis 8 in Verbindung mit Anspruch 9, wobei die Umfeldalbedo-Kartographien in jedem der jeweiligen Wellenlängenbereiche verwendet werden, um bifaziale Photovoltaikmodule anzuordnen, wobei ferner eine relative Bedeutung der Umfeldalbedo in einem Wellenlängenbereich im Vergleich zu einem anderen Wellenlängenbereich berücksichtigt wird, basierend auf wenigstens der Art der in den bifazialen Modulen verwendeten Materialien mit photovoltaischen Eigenschaften.

11. Vorrichtung zur Charakterisierung einer Albedo eines Umfelds anhand eines von diesem Umfeld aufgenommenen digitalen Bildes, wobei die Vorrichtung wenigstens eine Kamera zur Aufnahme des digitalen Bildes, ein auf dem Umfeld anzuordnendes Testmuster und eine Schaltung zur Verarbeitung des aufgenommenen Bildes zur Durchführung des Verfahrens nach einem der vorhergehenden Ansprüche umfasst.

12. Computerprogramm mit Anweisungen zur Durchführung des Verfahrens nach einem der Ansprüche 1 bis 10, wenn diese Anweisungen von einem Prozessor einer Verarbeitungsschaltung ausgeführt werden.

**Claims**

1. A method for characterising an albedo of a land parcel, based on an acquired digital image of this land parcel using at least one camera, the method comprising:

   - a prior calibration of the camera, wherein an intensity correction matrix is acquired for each pixel (x,y) of the image acquired by the camera, and
   - a current characterisation of the albedo of a land parcel on which a target, with a known albedo $\alpha_{Reference}$, is deposited on the ground so as to be present in a current image acquired with the same camera, said current characterisation of the albedo of the land parcel being carried out through a processing of the current image wherein:

     • the intensity of each pixel (x,y) of the current image is divided by a coefficient of the correction matrix corresponding to this pixel, to generate a corrected current image $Im_{Corr}^{Site}(x, y)$,
     • an average light intensity $I_{average}^{ref}$ of the target appearing in the corrected image is estimated, and
     • an albedo map of the land parcel $\alpha_{Site}(x, y)$ as a function of the known albedo of the target $\alpha_{Reference}$ is determined, by a relationship of the type $\alpha_{Site}(x, y) =$

$$\frac{Im_{Corr}^{Site}(x,y)}{I_{average}^{ref}} * \alpha_{Reference}$$

   and wherein, the prior calibration of the camera including:

   - the acquisition, using the camera, of a reference digital image of a reference object,
   - statistical processing of this reference image to identify a pixel standard intensity $\mu$ in the reference image, then
   - a comparison of each pixel intensity $Im(x, y)$ of the reference image with the standard intensity $\mu$ to obtain the correction matrix $M_{corr}(x, y)$ of each pixel $(x, y)$ of the camera,

   **characterised in that** the correction matrix $M_{corr}(x, y)$ of each pixel $(x, y)$ of the camera is expressed by a relationship of the type:

$$M_{corr}(x, y) = \frac{Im(x, y) - \mu}{Im(x, y)}$$

2. The method according to claim 1, wherein said prior calibration is carried out to take account of a dispersion of sensitivity between the photosites of a detector of the camera.

3. The method according to anyone of the preceding claims, wherein the statistical processing is performed pixel-by-pixel, to determine a distribution law model, from which a central value $\mu$ corresponding to said standard intensity is extracted.

4. The method according to claim 3, wherein said model is a Normal distribution law model, obtained by determining a frequency of occurrence of each pixel intensity in the reference image as a function of this pixel intensity.

5. The method according to anyone of the preceding claims, wherein the reference object used for the calibration corresponds to said target with a known albedo.

6. The method according to anyone of the preceding claims, wherein:

   - a plurality of cameras are used, sensitive in respective wavelength ranges, the correction matrices of which each specific to one camera are acquired,
   - respective current images of the land parcel are acquired, with the target set on the ground, using each of the cameras and the acquired current images are processed to obtain an albedo map of the land parcel in each of said respective wavelength ranges.

7. The method according to claim 6, wherein the wavelength ranges include at least the visible range and the infrared range.

8. The method according to claim 7, wherein an average albedo map of the land parcel $\alpha_{Site}(x, y)$ is estimated with weights assigned to the albedo maps of the land parcel $\alpha_{Site}^{Visible}, \alpha_{Site}^{Infrared}$ obtained in said respective wavelength ranges, according to a relationship of the type:

$$\alpha_{Site}(x, y) = A\alpha_{Site}^{Visible}/(A + B) + B\alpha_{Site}^{Infrared}/(A + B)$$

, with *A* and *B* being positive.

9. The method according to anyone of the preceding claims, wherein the albedo map of the land is used to arrange bifacial photovoltaic modules in optimum locations on the land parcel.

10. The method according to anyone of claims 6 to 8, considered in combination with claim 9, wherein the albedo maps of the land parcel are used in each of said respective wavelength ranges, to arrange bifacial photovoltaic modules, while also taking account of a relative importance of albedo of the land parcel in one wavelength range compared to another wavelength range, at least according to the type of materials with photovoltaic properties used in said bifacial modules.

11. A device for characterising an albedo of a land parcel, based on an acquired digital image of this land parcel, the device comprising at least one camera for acquiring said digital image, a target to be arranged on the land parcel and a circuit for processing said acquired image for the implementation of the method according to anyone of the preceding claims.

12. A computer program including instructions for the implementation of the method according to anyone of claims 1 to 10, when said instructions are executed by a processor of a processing circuit.

**FIG. 1**

FIG. 2